# EUROPÄISCHE PATENTSCHRIFT

(11) **EP 0 356 742 B1**
(45) Veröffentlichungstag und Bekanntmachung des Hinweises auf die Patenterteilung: **21.04.1993**
(21) Anmeldenummer: 89114236.6
(22) Anmeldetag: 02.08.1989
(51) Int. Cl.: B60B 33/00

(54) **Lenkrolle mit einer Radachse bzw. Welle, welche in einer Lenkgabel gelagert ist**
Castor with an axle or shaft supported in a bracket
Roue à pivot avec essieu, respectivement arbre, supportée dans une fourche de guidage

(30) Priorität: 17.08.1988 DE 3827919
(43) Veröffentlichungstag der Anmeldung: 07.03.1990
(73) Patentinhaber: Jungheinrich Aktiengesellschaft, 22047 Hamburg (DE)
(72) Erfinder: Hoener, Siegfried, Dr. Ing., D-2000 Hamburg 61 (DE)
(74) Vertreter: Patentanwälte Hauck, Graalfs, Wehnert, Döring, Siemons

(56) Entgegenhaltungen:
- CA-A- 1 199 154
- PATENT ABSTRACTS OF JAPAN, Band 4, Nr. 125 (M-30)[607], 3. September 1980, Seite 97 M 30; & JP-A-55 83 602 (MIYAO YOSHINO) 24-06-1980
- PATENT ABSTRACTS OF JAPAN, Band 6, Nr. 130 (M-143)[1008], 16. Juli 1982; & JP-A-57 55 201 (SUEHIRO GIKEN K.K.) 02-04-1982

## Beschreibung

Die Erfindung bezieht sich auf eine Lenkrolle mit einer Radachse bzw. Welle, welche in einer Lenkgabel gelagert ist, gemäß dem Oberbegriff von Anspruch 1.

Solche Lenkrollen stellen sich durch Pendelung oder Verschwenkung um die Schwenkachse immer so ein, daß die Lenkrolle nachläuft und sich zur jeweiligen Bewegungsrichtung ausrichtet.

Probleme treten auf, wenn hinsichtlich der Fahrtrichtung des Fahrzeuges, an dem die Lenkrolle angeordnet ist, eine Richtungsumkehr stattfindet. Im normalen Nachlauf befindet sich die Lenkrolle aufgrund des Schleppvorganges durch den Nachlauf in einer quasi stabilen Lage zur Schwenkachse. Bei einer Richtungsumkehr ergibt sich demgegenüber für die Lenkrolle eine labile Einstellung zur Schwenkachse mit der Folge, daß die Lenkrolle in die neue Nachlaufrichtung umschlägt, wobei die Seite, zu der der Umschlag erfolgt, unbestimmt ist.

Ein solches Umschlagen hat mehrere Nachteile. Entsprechend der Ausladung der Lenkgabel erfolgt eine seitliche Versetzung des Fahrzeuges bzw. der Schwenkachse, weil die Lauffläche des Rades der Lenkrolle an einen Punkt des Bodens gedrückt wird, um welchen die Lenkgabel umschlägt. Hierbei wird die die Lauffläche bildende Bandage darüber hinaus stark beansprucht, weil erhebliche Reibung auftritt. Der Antrieb des Fahrzeuges wird besonders belastet, wobei dann im Moment des Umschlagens auch aufgrund der seitlichen Auslenkung das Fahrzeug seitlich ausbrechen kann.

Wenn gemäß obigen Angaben in den Schenkelenden der Lenkgabel Schlitze angeordnet sind, so befinden sich diese Schlitze jeweils auch nur an einer Seite der Schwenkachsen, d.h. in Nachlaufrichtung.

Die Erfindung geht nun schon bereits davon aus, daß die Radachse bzw. Welle durch eine Lageranordnung an der Lenkgabel in einer Ebene senkrecht zur Schwenkachse in Längsrichtung der Lenkgabel zu beiden Seiten der Schwenkachse hin bewegbar ist und die Enden der Radachse bzw. Welle in Führungen geführt sind.

Durch eine solche Ausführung sollen bei einer Richtungsumkehr der Fahrtrichtung um ca. 180° ein Ausschwenken der Lenkrolle vermieden, aber bei einer Fahrt in umgekehrter Richtung die üblichen Eigenschaften einer nachlaufenden Lenkrolle beibehalten werden.

Aus der DE-A-1 805 607 ist eine Lenkrolle mit einer nacheilenden Rollenachse bekannt, wobei aber ein um eine senkrecht zur Fahrbahn stehende Achse drehbarer Bügel vorhanden ist und der Rollenschuh sich gegen den Bügel mittels einer konzentrisch zur Rollenachse gewölbten Fläche an seinem Mittelteil abstützt. Diese Ausführung ist kompliziert und bezweckt, eine willkürliche Ausschwenkung der Lenkrolle bei Fahrtrichtungsumkehr zu vermeiden, d.h. eine Blockierung bzw. auch eine zu starke Reibung der Rolle auf der Fahrbahn zu verhindern. Dabei soll ein Rückwärtsanfahren ohne Erhöhung des Fahrwiderstandes und ohne seitliches Ausschwenken des Wagens oder dergleichen ermöglicht werden.

Die Verwendung eines Schwenkhebels, der unter Federeinwirkung steht, stellt einen erheblichen Aufwand dar.

Hierbei ist es auch bekannt, Schlitze für eine Rollenachse vorzusehen, wobei diese Schlitze bei der Bewegungsrichtungsänderung durchwandert werden.

Die Verlagerung einer Radachse in Schlitzen ist aus der FR-A-469 888 bekannt. Diese Schlitze können auch gekrümmt oder geneigt sein. Dadurch ergeben sich zwar Verlagerungsmöglichkeiten, aber die Führung der Räder ist in dieser bekannten Ausführung nicht gesichert.

Gleiches gilt für die US-A-1 839 396. Die seitlichen Schlitze haben in ihrem mittleren Teil einen gekrümmten Abschnitt. Dieses hat den Zweck, daß jedenfalls der Umfang des Rades beim Übergang zwischen den Endstellungen an einem Kopf der Drehachse läuft, so daß das Gewicht eines Möbels von den Achsstummeln auf den Radumfang übertragen wird. Dadurch soll eben das Rad frei an das entgegengesetzte Ende der Gabel rollen können. Das freie Rollen hat aber Nachteile hinsichtlich einer genauen Führung, und eine Ungenauigkeit innerhalb der frei rollbaren Rollen oder Räder führt zu seitlichen Schwenk-oder Wechselbewegungen. Gerade solche sollen aber vermieden werden.

An Stelle von Schlitzen ist es auch aus dem DE-U-1 906 861 bekannt, ein Rad mittels Führungshülse auf einer Stange hin-und herzubewegen, so daß das Rad sich an die beiden Seiten der Schwenkachse bewegen kann. Dabei ist eine Vorbelastung in eine Richtung durch eine Feder bekannt.

Aus der GB-A-2 170 400 ist eine schräge Anordnung einer Rolle an einem Drehkopf bekannt. Dieses schließt eben gerade nicht eine Hin- und Herbewegung bei Bewegungsrichtungsumkehr des Fahrzeuges aus. Die verschiebbare Anordnung der Rolle an einer schräg gerichteten Stange läßt nun zwar die Wanderung der Rolle in Längsrichtung der Stange zu, dieses ist aber aufwendig. Durch eine Schrägstellung der Radlagerung wird ein vorzeitiger Widerstand gegen die Drehung der drehbaren Achse erzeugt. Bei Richtungsänderung der Anordnung um weniger als 180° wird der Widerstand größer als die Gegenkraft, die durch die Räder aufgebracht wird, so daß der Rotor und der Radlagerkörper sich gemeinsam drehen. Gerade das hat Nachteile. Bei Bewegungsrichtungsänderung ist der genannte Widerstand kleiner als die auf die Räder aufgebrachte Gegenkraft, so daß eine Abwälzung der Räder das Ergebnis hat, daß sich der Rotor um 180° dreht und so die Neigung des Radlagerkörpers umkehrt. Hier wird gerade eine Erscheinung gefördert, die für nachteilig gehalten wird.

Zur Führung einer Radachse bzw. Welle in parallelen Schlitzen ist ferner bekannt, Eingriffsrollen oder -räder an den Achsenden anzuordnen. Die JP-A-55 83 602 offenbart die Anordnung von Zahnrädern auf den Enden einer Achse, auf der das Rad gelagert ist. Die Zahnräder stehen in ständigem Eingriff mit innerhalb der Schlitze angeordneten Zahnstangen. Solch ein ständiger Eingriff ist auch aus dem JP-A-57 55 201 bekannt, das dem Oberbegriff des Anspruchs 1 entspricht, wobei Kugellager auf den Achsenden angeordnet und die äußeren Laufringe der Kugellager verschiebbar in Führungsteile eines beweglichen Rahmens eingepaßt sind.

Diese bekannten Eingriffsrollen oder -räder verbessern die Parallelführung durch seitliche Anordnungen, mit denen sie in ständigem Eingriff stehen. Die Sicherung einer gleichmäßigen Verlagerung sowie die Sicherung der Endstellung des Rades erscheint aber verbesserungsbedürftig, um eine Richtungsumkehr jederzeit einwandfrei zu gewährleisten, da z.B. Verkantungen bei den bekannten Eingriffsrollen noch möglich sind.

Der Erfindung liegt die Aufgabe zugrunde, eine Lenkrolle eingangs angegebener Art zu schaffen, um den Durchgang des Rades zwischen seinen Endpunkten zu stabilisieren, wobei für die Endstellungen des Rades, aber auch für die Durchgangsbewegung besondere Einflüsse für die Sicherung einer gleichmäßigen Verlagerung von einer Seite zur anderen Seite der Schwenkachse gegeben sind.

Diese Aufgabe wird gelöst durch die Merkmale des Anspruchs 1.

Solche Eingriffsrollen beeinflussen die Drehung des Lenkgabel-Rades, wobei einbezogen wird, daß dabei nicht nur die Parallelführung durch seitliche Anordnungen verbessert wird, sondern ein unmittelbarer Eingriff auf dem Radumfang einerseits zur Zulassung der freien Verdrehbarkeit und Sicherung der Endstellung und gleichzeitig andererseits Zwangsführung durch Umfangsablauf im Übergangsbereich vorgesehen sind.

Zur Verwirklichung ergeben sich mehrere Lösungen.

Die Erfindung wird im folgenden anhand von Ausführungsbeispielen erläutert, die in der Zeichnung dargestellt sind. In der Zeichnung zeigen:
- Fig. 1: die Unteransicht eines Fahrgestells mit Lenkrollen nach der Erfindung;
- Fig. 2: eine Seitenansicht einer erfindungsgemäßen Lenkrollenanordnung mit durch gestrichelte Linien gezeichneten inneren Ausführungsformen in schematischer Darstellung;
- Fig. 3: eine der Fig. 2 entsprechende Ausführungsform, jedoch in einem Mittelschnitt parallel zur Zeichnungsebene in weitestgehend schematischer Darstellung;
- Fig. 4: eine Stirnansicht der Ausführung nach den Fig. 2 und 3 bezüglich einer Seite der Gabelanordnung im Schnitt;
- Fig. 5: einen Teilschnitt längs der Linie XXIV-XXIV durch Fig. 4 zur Erläuterung der Lagerung von Führungselementen im Schnitt;
- Fig. 6: eine schematische Seitenteilansicht im Mittelschnitt zur Darstellung des Rades der Lenkrolle und ihm zugeordneter Antriebs- und Führungsmittel.

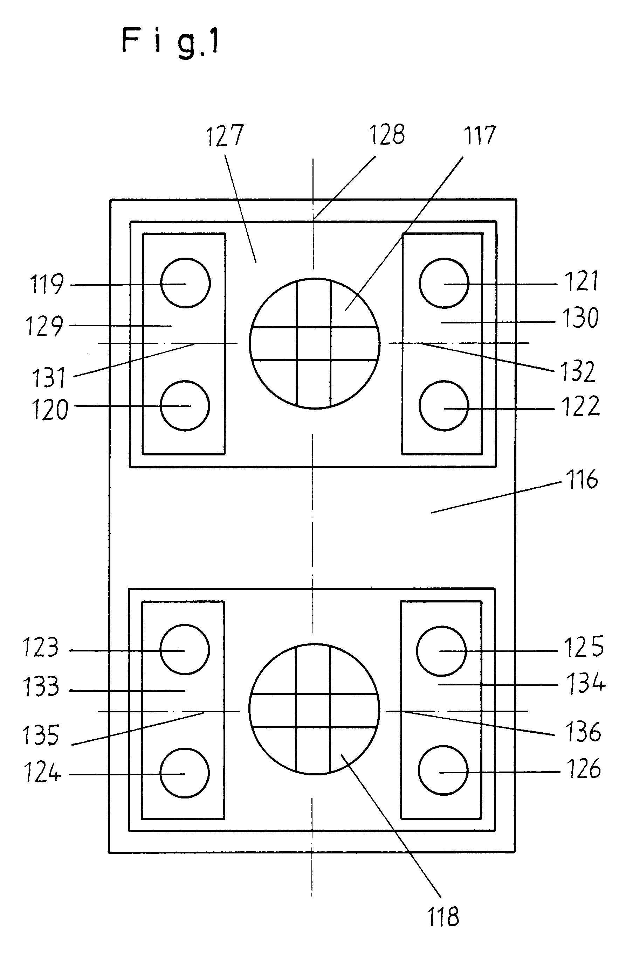

Die Fig. 1 zeigt die Unteransicht eines Fahrgestells 116. In diesem Fahrgesteil 116 sind zwei lenkbare Antriebsräder 117, 118 angeordnet. Diesen sind im Zusammenhang acht Lenkrollen zugeordnet, wobei diese Lenkrollen mit 119 bis 122 in Zuordnung zum Antriebsrad 117 und mit 123 bis 126 in Zuordnung zum lenkbaren Antriebsrad 118 bezeichnet sind.

Diese Hinweise werden zur Erläuterung der Problematik gegeben, daß nämlich bei einer Hin- und Herfahrt dann, wenn die Lenkrollen 119 bis 126 in undefinierter Weise ausladen, das Fahrzeug auf diesem kurzen hin und her gerichteten Kurs nicht stabil gehalten werden kann. Dazu trägt auch die Problematik der Bodenhaftung bei. In diesem Zusammenhang ist es bekannt, dem lenkbaren Antriebsrad 117 eine Wippe 127 zuzuordnen, die um eine Mittelachse 128 durch das lenkbare Antriebsrad 117 frei verschwenkbar ist. An den Enden dieser Wippe sind dann wiederum zwei schwenkbare Trägerplattformen 129, 130 wippenartig angeordnet, und zwar jeweils um quer zur Längsachse des Fahrzeuges gerichtete Achsen 131, 132 frei verschwenkbar.

Dem anderen lenkbaren Antriebsrad 118 sind in der beispielhaften Ausführung für die Lenkrollen 123 bis 126 zwei wippenartige Träger 133, 134 zugeordnet, die jeweils um eine Querachse 135, 136 verschwenkbar sind, die die Dreh- oder Schwenkachse des lenkbaren Antriebsrades 118 schneidet.

Eine solche Anordnung der Lenkrollen 119 bis 126 soll für eine gleichmäßige Bodenhaftung sorgen. Dieser relativ komplizierte Aufbau zeigt aber auch, daß gerade im Hinblick auf nicht immer total horizontale Bodenflächen Probleme entstehen können. In diesem Zusammenhang ist der Aufgabenstellung der Erfindung besonders wesentlich, daß die Lenkrollen für eine Hin- und Herfahrt, jedenfalls in kürzeren Funktionsabschnitten, stabil bleiben.

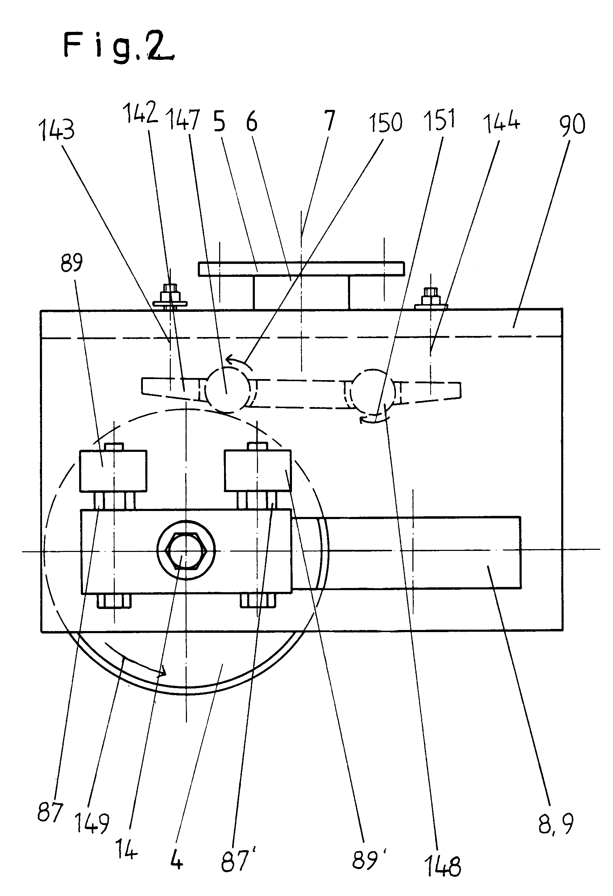

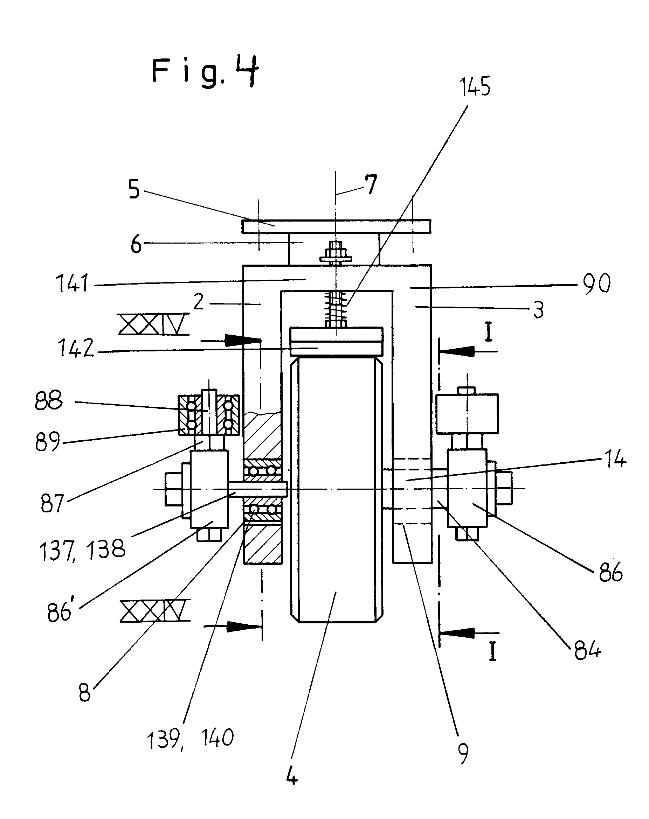

Aus Fig. 2 ist in der Seitenansicht erkennbar, daß in den Schenkeln einer Lenkgabel 90 Schlitze 8, 9 angeordnet sind, wobei in Fig. 2 ein Schlitz 8 gezeigt ist. Ein Rad 4 ist mit seiner Achse 14 geführt, die beiderseits der Lenkgabel 90 durch die Schlitze 8, 9 heraustritt. Beide Schlitze sind in Fig. 4 gezeigt.

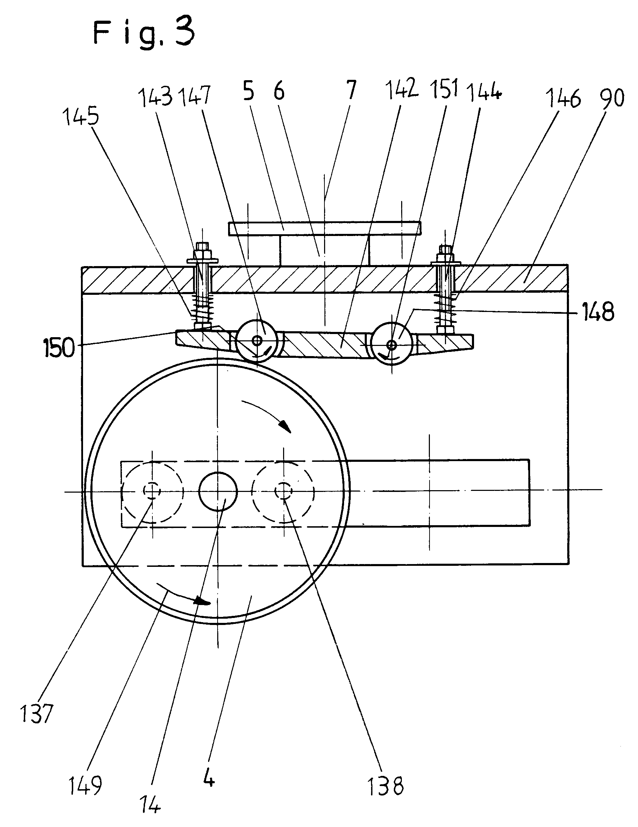

An den äußeren Enden der Achse 14 ist jeweils ein Klotz 86, 86' angeordnet. Dieser Klotz wird von der Radachse getragen. Von diesem Klotz gehen aber gemäß Fig. 3 bis 5 zwei Achsen 137, 138 aus, wobei diese auf einen Klotz bezogen sind. Die beiden Achsen sind beiderseits der Radachse angeordnet und ragen in die jeweils benachbarten Schlitze 8, 9 hinein und führen in diesen Schlitzen beispielsweise mittels Wälzlager angeordnete oder auch als Wälzlager ausgeführte Rollen 139, 140, immer bezogen auf Fig. 4, auf eine Seite.

Dadurch ist eine Parallelführung der Klötze 86 und 86' gewährleistet.

Auf diesen Klötzen ist über ein insbesondere als Welle oder Achse ausgeführtes Ansatzstück 87 jeweils eine Wälzlageranordnung 88 mit einer Außenfläche 89 vorgesehen, die an der Außenseite der Schenkel 2, 3 läuft.

Das Ansatzstück 87 mit der Wälzlageranordnung 88 und der radförmigen Außenfläche 89 ist gemäß Fig. 2 beiderseits der Achse 14 angeordnet, d.h. es sind gemäß Fig. 2 zwei Ansatzstücke 87, 87' und zwei radförmige Außenflächen 89, 89' symmetrisch zur Achse 14 angeordnet. Dabei können diese Ansatzstücke 87, 87' durchaus entsprechend den Achsen bzw. Wellen 137, 138 angeordnet sein, welche nach innen in die Schlitze 8, 9 ragen und in diesen die Rollen 139, 140 tragen.

Damit ist eine Parallelführung der Klötze 86, 86' und deren seitliche Ausrichtung gewährleistet, wobei diese Ausführung auch eine Führung des Rades unter schwersten Belastungen gewährleistet. Schon diese Ausführung ist für sich eine vorteilhafte Ausgestaltung.

In den Fig. 2 bis 4 ist aber weiterhin gezeigt, daß innerhalb der Lenkgabel 90, und zwar ausgehend von dem Steg 141, der die Schenkel 2, 3 verbindet, eine Reibplatte 142 angeordnet ist, die an den Stiften 143, 144 höhenbeweglich gelagert ist und durch Federn 145, 146 an die Lauffläche des Rades gedrückt wird. Das ist vorteilhaft, um beim Übergang der Bewegungsrichtungen eine Drehung des Rades zu hemmen. In der bevorzugten Ausführung, die noch anhand der Fig. 2 geschildert wird, besitzt die Platte 142 zwei Eingriffsrollen 147, 148, welche dafür sorgen, daß das Rad 4 in einer Endstellung an seiner Drehung gehemmt wird.

Aus der Fig. 2 geht hervor, daß dann, wenn das Rad 4 in der linken Endstellung ist und dann an der Eingriffsrolle 147 anliegt, eine Bewegung des Fahrzeuges mit der Gabel 90 nach links eine entsprechende Drehung des Rades in Richtung des Pfeils 149 gehemmt wird, weil die Eingriffsrolle 147 einen Freilauf in Richtung des Pfeils 150 hat und in der anderen Drehrichtung sperrt. Insofern verbleibt das Rad 4 im Stillstand, wobei sich die Radachse 14 in der beschriebenen Weise in den Schlitzen 8, 9 verlagert hat und sich erst drehen kann, wenn das Rad 4 die Eingriffsrolle 147 verlassen hat. Bei der Weiterfahrt auch in Anlage an der Eingriffsrolle 148 kann sich dann das Rad im Sinne des Pfeils 149 drehen. Dieses entspricht dem Freilauf in Richtung des Pfeils 151 der Eingriffsrolle 148.

Beim Übergang zwischen den Eingriffsrollen 147, 148 wird die Drehung des Rades 4 durch elastischen Andruck der Reibplatte 142 gehemmt.

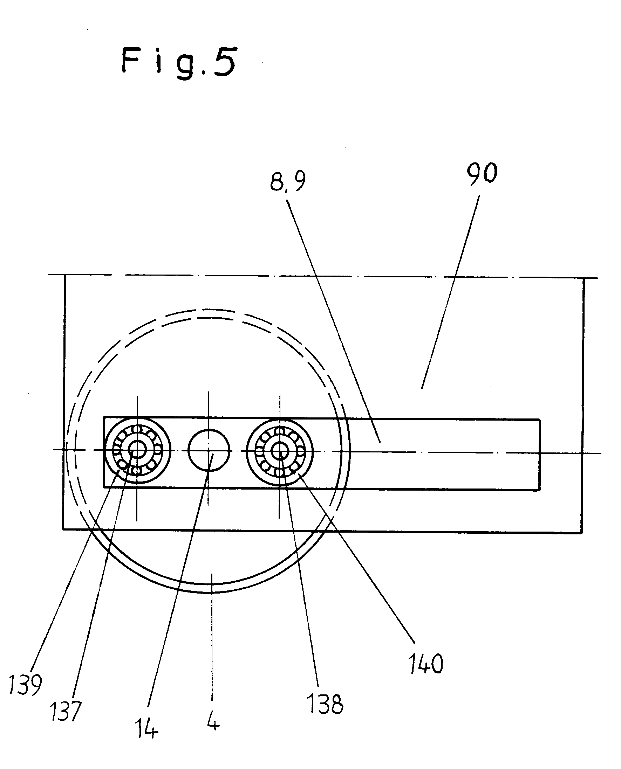

In Fig. 5 sind die Rollen 139, 140 mit ihren Wälzlagern erkennbar, weil es natürlich darauf ankommt, in den Schlitzen 8, 9 möglichst reibungsarm zu arbeiten. Die Wälzlager, welche mit ihren Außenflächen auch Rollen bilden, führen die Achsen 137, 138 zu den Klötzen 86, 86'. Zwischen den Achsen 137, 138 werden die Schlitze 8, 9 von der Radachse 14 durchsezt. Fig. 5 zeigt daher zusätzlich den Aufbau mit der Parallelführung des Rades innerhalb der Gabel 90.

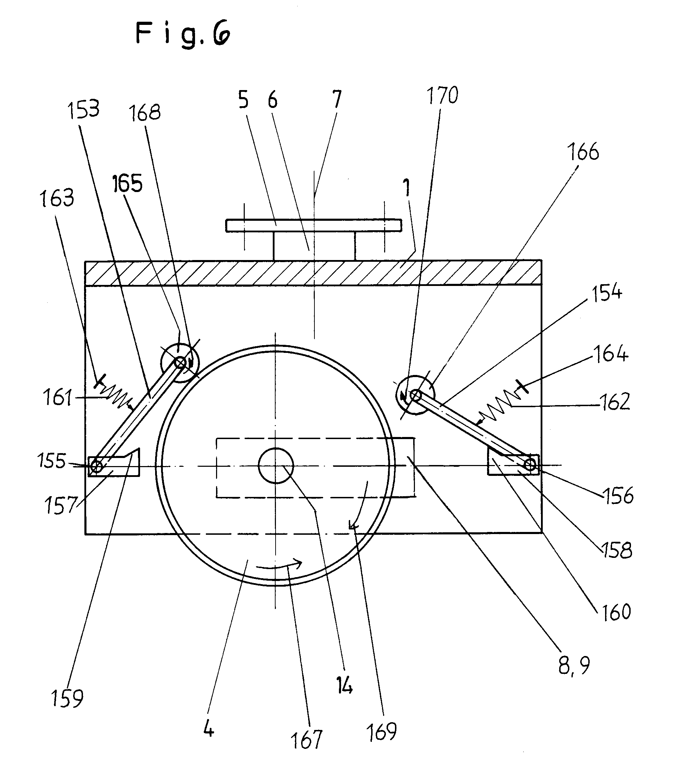

Nach Fig. 6 ist mit den Teilen 5, 6 der senkrechten Schwenkachse 7 eine Lenkgabel 1 gezeigt, zwischen deren Schenkeln 2, 3 das Rad 4 in Schlitzen 8, 9 in angegebener Weise gelagert ist, wobei die Radachse 14 an ihren beiden Enden in den Schlitzen 8, 9 innerhalb Kulissensteinen, Wälzlagerteilen oder dergleichen leichtläufig geführt ist.

Dabei liegt ein wichtiger Gesichtspunkt darin, daß die Reibung R_{B} des Rades 4 auf dem Boden größer sein muß als die Reibung R_{S} der Bewegungsmittel in den Schlitzen. Dieses wird durch die Belastung und die speziellen Ausführungen gewährleistet, wozu auch Führungsmittel mit Freiläufen kommen. Dieses gilt inbesondere auch für die zuletzt beschriebenen Ausführungen nach den Fig. 2 und 3, wo Eingriffsrollen 147, 148 mit Freiläufen eingezeichnet sind. Dabei liegt in jenen Figuren die Funktion in einer Freigabe oder Hemmung des Rades.

Einbezogen wird nach Fig. 6 ein wesentlicher Gesichtspunkt dahingehend, daß nicht nur eine Freigabe oder Hemmung, sondern ein Antrieb des Rades 4 in seine Endstellungen mit vorgesehen ist. Unter diesem Gesichtspunkt und der Wanderungsmöglichkeit der Radachse 14 in den Schlitzen 8, 9 sind in der Gabel zwei federbelastete Schwenkhebel 153, 154 um Schwenkachsen 155, 156 verschwenkbar gelagert, die in der Lenkgabel 1 bzw. zwischen ihren Schenkeln angeordnet sind.

Diesen Schwenkachsen 155, 156 sind Schwenkanschläge 157, 158 zugeordnet, die an ihren inneren, d.h. den Schlitzen 8, 9 zugekehrten Enden ein Widerlager 159, 160 bilden, an welchen sich jeweils ein Schwenkhebel 153, 154 anlegt, wenn er sich unter der Einwirkung jeweils einer Andruckfeder 161, 162 frei bewegen kann. Diese Andruckfedern 161, 162 sind an Widerlagern 163, 164 abgestützt, die in der Lenkgabel 1 angeordnet sind.

An den Enden der Schwenkhebel 153, 154 sind Eingriffsrollen 165, 166 gelagert. Diese Eingriffsrollen sind nur in einer Richtung frei drehbar, während sie in der anderen Drehrichtung gesperrt sind. Hierbei handelt es sich um den Fig. 2, 3 entsprechende Eingriffsrollen, die in Richtung der eingezeichneten Pfeile 168 und 170 verdrehbar sind. Dieses dient im Sinne obiger Ausführungen dazu, daß das Rad 4 praktisch im Stillstand im ungedrehten Zustand gehalten wird, während seine Radachse im Schlitz an das andere Ende wandert, die aber dann unter dem Freilauf der dann anliegenden Eingriffsrollen 145, 146 frei drehbar ist.

Das bedeutet hinsichtlich der Fig. 6 in der gezeigten Ausgangsstellung, in welcher das Rad 4 links angeordnet ist, daß bei einer Bewegung der Gabel 1 nach links das Rad 4 die Tendenz hat, in Richtung des Pfeiles 167, d.h. entgegen dem Uhrzeigersinn umzulaufen.

Die anliegende Eingriffsrolle 165 hat einen Freilauf im Sinne des Pfeiles 168, so daß praktisch eine Sperrung der Drehung des Rades 4 vorliegt, jedoch aber unter dem Einfluß der Feder 161 die Wanderungstendenz des Rades in das andere Ende des Schlitzes 8, 9 unterstützt wird. Dabei fährt das Fahrzeug mit der Gabel nach links. Es wird dabei durch die Feder 161 in die andere Endlage gegenüber der gezeichneten Endlage gedrückt. Dabei kommt das Rad mit der Eingriffsrolle 166 in Anlage und hebt durch Andruck den Schwenkhebel 154 ab. Bei diesem Durchgang dreht sich das Rad 4 in Richtung des Pfeiles 169 relativ zu den benachbarten Teilen, d.h. auch entsprechend zum Freilauf der Rolle 166 in Richtung des Pfeiles 170.

Dadurch kann jetzt das Rad bei Weiterbewegung des Fahrzeuges bzw. der Gabel als Halterung einer Lenkrolle am Fahrzeug frei umlaufen, wobei schon die Bewegungsrichtung das Rad 4 an dem erreichten Ende des Schlitzes hält. Bei einer Bewegungsumkehr des Fahrzeuges treten dann wiederum die Freilaufsperren wechselseitig in dem angegebenen Sinne ein.

## Patentansprüche

1. Lenkrolle mit einer Radachse (14) bzw. Welle, welche in einer Lenkgabel (1, 90) gelagert ist, zwischen deren Schenkeln (2, 3) ein Rad (4) drehbar gelagert ist, und die um eine Schwenkachse (7) senkrecht und versetzt zur Radachse (14) schwenkbar gelagert ist, wobei die Radachse bzw. die Welle in einer Führung (8, 9) senkrecht zur Drehachse (7) bzw. zur Schwenkachse (7) in beiden Richtungen hin bewegbar ist, dadurch gekennzeichnet, daß das Rad (4) in den Endlagen mit jeweils einer nachgebenden oder nachgebend gelagerten Eingriffsrolle (147, 148; 165, 166) in Umfangseingriff ist und die jeweils in Eingriff mit dem Rad befindliche Eingriffsrolle (147; 165) bei Bewegung des Rades in Richtung der anderen Eingriffsrolle (148; 166) abgebremst ist.

2. Lenkrolle nach Anspruch 1, dadurch gekennzeichnet, daß die Radachse (14) bzw. Welle in einem Schlitz (8, 9) geführt ist.

3. Lenkrolle nach Anspruch 1, dadurch gekennzeichnet, daß die Eingriffsrollen (147, 148) in einer Reibplatte (142) angeordnet sind, an welcher das Rad beim Durchgang zwischen den Eingriffsrollen läuft, und daß die Reibplatte mit Federn (145, 146) abgestützt ist, welche die Eingriffsrollen nachgebend lagern und die Reibplatte an das Rad (4) drücken.

4. Lenkrolle nach Anspruche 1 oder 2, dadurch gekennzeichnet, daß bei Einsatz von Eingriffsrollen (165, 166) mit Freilauf eine durch Andruckfedern (161, 162) gebildete Vorbelastung auf das Rad (4) zwecks Antriebs zu seiner Verlagerung an das andere Ende des Schlitzes (8, 9) vorgesehen ist.

5. Lenkrolle nach Anspruch 4, dadurch gekennzeichnet, daß die Eingriffsrollen (165, 166) mit Freilauf an Schwenkhebeln (153, 154) gelagert sind, welche durch Andruckfedern (161, 162) zum Kontakt an das Rad (4) beaufschlagt sind und für welche Schwenkhebel (153, 154) Widerlager (159, 160) für die Schwenkrichtung zum Rad (4) hin vorgesehen sind, wobei die Belastung der Schwenkhebei einen Schubantrieb für das Rad bilden.

6. Lenkrolle nach einem der Ansprüche 1 - 5, dadurch gekennzeichnet, daß eine in Schlitzen (8, 9) mittels eines Führungselementes (139, 140), beispielsweise eines Doppelwälzlagers, geführte Radachse (14) an der Außenseite der Schenkel (2, 3) der Lenkgabel (90) einen Klotz (86, 86') aufweist, an welchem rechtwinklig zur Achsrichtung der Radachse (14) wenigstens eine drehbare Wälzlageranordnung (88) angeordnet ist, deren Außenfläche (89) an der Außenseite des jeweiligen Schenkels (2, 3) der Lenkgabel läuft.

## Claims

1. A castor with an axle (14) or shaft supported in a bracket (1, 90), between which legs (2,3) a wheel (4) is rotatably supported, which bracket is rotatably supported about a pivot axis (7) vertically and offset with respect to the wheel axle (14), wherein the wheel axle or the shaft is adapted to perform a to and fro motion along a guide means (8,9) vertical with respect to the rotational axis (7) of the pivot axis (7),
characterized in that the wheel (4) in the end positions is peripherally engaged by a resilient or resiliently supported engaging roller (147, 148; 165, 166) each, and that the engaging roller (147; 165) each being in engagement with the wheel is braked when the wheel is moved towards the other engaging roller (148; 166).

2. The castor of claim 1,
characterized in that the wheel axle (14) or shaft is guided in a slot (8, 9).

3. The castor of claim 1,
characterized in that the engaging rollers (147, 148) are provided in a friction plate (142) on which the wheel runs in passing between the engaging rollers, and that the friction plate is supported by springs (145, 146) for resiliently supporting the engaging rollers add which urge the friction plate onto the wheel (4).

4. The castor of claim 1 or 2,
characterized in that in using engaging rollers (165, 166) including free-running means the wheel (4) is prebiased by pressing springs (161, 162) for driving the wheel in the direction of displacement toward the other end of the slot (8, 9).

5. The castor of claim 4,
characterized in that engaging rollers (165, 166) including free-runs are supported on pivot levers (153, 154) which are biased by pressing springs (161, 162) onto the wheel (4) and for which pivot levers (153, 154) abutments (159, 160) for the pivot direction with respect to the wheel (4) are provided wherein the bias of the pivot axis defines a pushing drive for the wheel.

6. The castor of claim 1 to 5,
characterized in that a wheel axle (14) guided in slots (8, 9) by means of a guiding element (139, 140), for example a dual interfriction bearing, includes a block (86, 86') each provided on the outer surface of the legs (2, 3) of the bracket (90), which blocks carry at least an interfriction bearing (88) located normal with respect to the axis of the wheel axle (14), wherein the outer surface (89) of the interfriction bearings runs along the outer surface of the respective leg (2, 3) of the bracket.

## Revendications

1. Roue à pivot, comportant un axe de roue (14) ou un arbre, qui est montée dans une fourche de guidage (1, 90), entre les bras (2, 3) de laquelle une roue (4) est disposée tournante, et qui est montée de façon à pouvoir pivoter verticalement autour d'un axe de pivotement (7) et décalée par rapport à l'axe de la roue (14), étant entendu que l'axe de roue (14) ou l'arbre pouvant se déplacer, dans les deux directions, dans un guidage (8, 9) perpendiculairement à l'axe de rotation ou à l'axe de pivotement (7),
caractérisée en ce que la roue (4) est en engagement périphérique dans chacune des positions limites avec, chaque fois, un galet de contact (147, 148; 165, 166), élastique ou monté élastiquement, et caractérisé en outre que chaque galet de contact (147; 165) se trouvant en prise avec la roue est freiné lorsque la roue se déplace dans la direction de l'autre galet de contact (148; 166).

2. Roue à pivot suivant la revendication 1, caractérisée en ce que l'axe de roue (14) ou l'arbre est guidé dans une fente ou rainure (8, 9).

3. Roue à pivot suivant la revendication 1, caractérisée en ce que les galets de contact (147, 148) sont disposés dans un plateau de friction (142), sur lequel la roue tourne en se déplaçant entre les galets de contact et en ce que le plateau de friction est appuyé avec des ressorts (145, 146), qui positionnent élastiquement les galets de contact et qui poussent le plateau de friction contre la roue (4).

4. Roue à pivot suivant la revendication 1 ou la revendication 2, caractérisée en ce que, lors du fonctionnement des galets de contact (165, 166) en roue libre, il est prévu sur la roue (4) une précontrainte réalisée au moyen de ressorts de compression (161, 162) pour l'entraîner vers un positionnement à l'autre extrémité de la fente ou rainure (8, 9).

5. Roue à pivot suivant la revendication 4, caractérisée en ce que les galets de contact (165, 166) sont montés en roue libre sur des leviers pivotants (153, 154), qui sont mis en contact avec la roue (4) par des ressorts de compression (161, 162), et en ce que, pour ces leviers pivotants (153, 154), sont prévus des contre-paliers (159, 160) pour le pivotement en direction de la roue (4), caractérisé en outre que la charge des leviers pivotants crée un entraînement faisant coulisser la roue.

6. Roue à pivot suivant l'une quelconque des revendications 1 à 5, caractérisée en ce qu'un axe de roue (14), guidé dans des fentes ou rainures (8, 9) au moyen d'un organe de guidage (139, 140), par exemple un palier à roulement double, présente, sur la face externe des bras (2, 3) de la fourche de pivotement (90), un bloc (86, 86') sur lequel est disposé, perpendiculairement à la direction de l'axe de roue (14), au moins un dispositif de roulement (88), dont la face externe (89) tourne contre la face extérieure de chacun des bras (2, 3) de la fourche de pivotement.
